(19) Europäisches Patentamt
European Patent Office
Office européen des brevets

(11) EP 1 643 391 A2

(12) EUROPEAN PATENT APPLICATION

(43) Date of publication:
**05.04.2006 Bulletin 2006/14**

(51) Int Cl.:
***G06F 17/30*** *(2006.01)*

(21) Application number: **05108421.8**

(22) Date of filing: **14.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2004 US 953187**

(71) Applicant: **Microsoft Corporation**
**Redmond WA 98052 (US)**

(72) Inventors:
- **Wang, Lee**
  **Redm ond, WA 98052 (US)**
- **Li, Ying**
  **Redmond, WA 98052 (US)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

# (54) System and method for automatic generation of search results based on local intention

(57) A system and related techniques automatically analyze Web search and other activity, to generate locality-selected results based on not just the user's location, but also the business or other content provider's location and the degree of local intent in the user's query. The locality or region to the user may be identified, for instance, by the presence of geographic clues or indicators in the general content of the Web site, for instance, the presence of ZIP codes, telephone numbers, town names or other semantic or other indicators which have some geographic connotation in search terms, key words or other query or semantic inputs. The user's degree of local intent may be automatically analyzed as well, for instance by the presence of terms such as "car repair" or "pizza restaurant" which may suggest the user intends to locate local goods, services or providers. The search service may then access a content database to identify ads or other media or content which match or correspond to the detected locality or region, such as ads for local restaurants, car dealerships, physicians or other services or products, and which correspond in location, working radius and degree of localness to the user's query. Because the delivery of localized search results according to the invention is specifically filtered for user-driven local intent, advertisements and other media or content may be delivered which better match the user's search objectives.

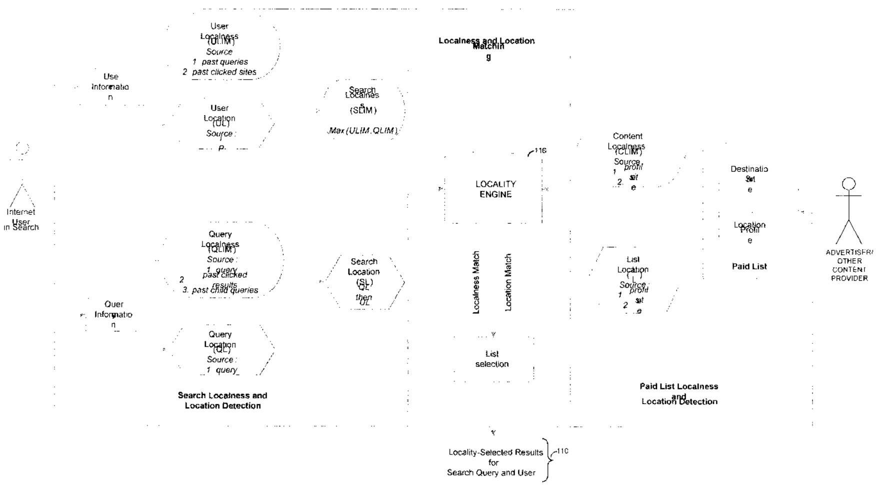


FIG. 2

EP 1 643 391 A2

## Description

### CROSS-REFERENCE TO RELATED APPLICATION

Not applicable.

### STATEMENT REGARDING FEDERALLY SPONSORED RESEARCH OR DEVELOPMENT

Not applicable.

### FIELD OF THE INVENTION

The invention relates to the field of network services, and more particularly to a platform for automatically detecting a user's local search intentions and delivering locality-based advertisements or other Web or other media based on a geographic match.

### BACKGROUND OF THE INVENTION

The advent of commercial paid advertisements and other media content has led to an increased demand for more highly targeted and effective marketing campaigns on the Internet. One general approach in delivering search results or other content to users consists of attempting to supply a user or groups of users with advertisements for businesses within some general geographic area of that user. Thus, a user who enters a search including a postal ZIP code, telephone number or other identifying information may be presented with advertisements for businesses or services such as local restaurants, news, retailers or other content, based on the corresponding location.

However, even search services which track user queries to attempt to generate localized results rely on lookups against possible geographic matches in ZIP code, area code or other regional identifiers. However, the potential geographic connotations of search terms by themselves can be ambiguous or misleading. For instance, a user may enter a brand, class, general name or category of products or services such as "Seattle's Best Coffee", "Kansas City barbecue" or "Canada Dry Ginger Ale", and under such platforms have search results returned which are not related to their actual geographic location, but instead the inferred location of the vendor or source. In other cases, regional results may be returned but those results may not be sorted or filtered according to the location of the user, the location of the business or their relative proximity to each other. In all cases, available search services do not include an ability to assess the "localness" or degree of local intent in a user's search, which degree of intention may assist in identifying, filtering or ordering results. Other problems in localized search delivery exist.

### SUMMARY OF THE INVENTION

The invention overcoming these and other problems in the art relates in one regard to a system and method for automatic generation of search results based on local intention, in which a user's desire for local or geographically focused information or results may be automatically assessed and factored into result selection and ordering. According to embodiments of the invention in one regard, the search framework enables the platform to detect and gauge the local search intentions of the end user, the search query and media content such as paid advertisements or listings, and then match a user/query's localness degree with that of a paid listing or other content. According to embodiments of the invention in another regard, source content such as advertisements, Web documents or others may be scanned to execute a fault-tolerant match of text words in or related to location names, and the discovery of a best matching location path(s) from country down to zip level for a given text or other content stream. Advertisement or other content location may be defined in this manner, or specified by an advertiser or other entity. Once locations for advertisements or other content is identified, the platform may match advertisements or other content to a user or search query based on location and the degree of local intent in the user's inquiry, starting from an exact match to extended matches. According to embodiments of the invention in another regard, a working business radius may be defined to control how far geographically to match an ad with a user or query for a given business or other category.

### BRIEF DESCRIPTION OF THE DRAWINGS

Fig. 1 illustrates an architecture in which a system and method for automatic generation of search results based on local intention may operate, according to embodiments of the invention.

Fig. 2 illustrates a content delivery flow, according to embodiments of the invention.

Fig. 3 illustrates a maximum working radius which may be employed to identify candidate advertisements or other content, according to embodiments of the invention.

Fig. 4 illustrates a graphical relationship between working radius and query location, according to embodiments of the invention.

Fig. 5 illustrates a semantic tree which may be used to analyze local query intent, according to embodiments of the invention.

Fig. 6 illustrates a semantic tree which may be used to analyze local query intent in another regard, according to embodiments of the invention.

Fig. 7 illustrates a flowchart of overall local intention-based search and other processing, according to embodiments of the invention.

## DETAILED DESCRIPTION OF EMBODIMENTS

Fig. 1 illustrates an architecture in which a system and method for automatic generation of search results based on local intention may operate, according to embodiments of the invention. As illustrated in that figure, in embodiments a user may operate a client 102, such as a personal computer, network-equipped cellular telephone or other mobile device, or other client or machine using a user interface 112 such as a graphical user interface, to perform search activity, Web or Internet surfing, view, download or manipulate files or perform other tasks. In embodiments the user interface 112 may be, include or present an application such as a Web browser to permit a user to view Web, Internet or other network sites, such as intranet sites or other content.

In embodiments, the user may use Web browser or other application or interface to engage in search activity, for example hosted by search service 106 or other search facility or engine. According to embodiments of the invention in one regard, the user may operate a browser or other application or interface to input a set of search terms 104, such as typed-in text, words, number or other data, for transmission to search service 106 via the Internet or other network or connection. According to embodiments of the invention in a general regard, the search service 106 and associated resources may generally speaking receive and analyze the user's search query to determine whether the user is seeking to obtain results related to or representing local advertising, content or media, and to what degree that user may be seeking locality-selected content. According to embodiments of the invention in those regards, search service 106 may include or interface to a locality engine 116 which may analyze the user's local intent, the query's local intent, and/or the local intent of advertisements or other media to arrive at a set of locality-selected results 110 to present to the user of client 102 via user interface 112 or otherwise.

As one component of the process of assessing the local nature of the search or other event, according to embodiments of the invention the locality engine 116 or other resource may detect an explicit or inferred location of the user. This may be captured or inferred, for example, by a reverse look-up of the user's Internet protocol (IP) address which may be related to a host for that address or related service. The user's location in cases may also be identified through the user's registration or subscription to search service 106 including the recording of a home or other address or location. Other techniques for determining the user's location are possible.

In addition to user location, as further illustrated for instance in Fig. 2, the locality engine 116 may analyze the location and/or local intent of the set of search terms 104 themselves, to more accurately or appropriately match the user's location and/or local query intent advertisements or other content. That advertising or other content may for example be stored or hosted in a content database 108. Content database 108 may be, include or interface to an ad table 118 which may, for example, contain or store advertisements or other content. That content may in embodiments be categorized by, analyzed for or marked with an indication of, the geographic location and local intent of the content stored therein. According to embodiments for example illustrated in Fig. 3, for selected advertisers or other content providers, categories of providers or all providers, the content for those providers may be assigned a maximum working radius 118 which designates the probable distance inside of which a local user who is seeking that type of product or service would be interested.

For instance, for the category of retail car dealerships, the maximum working radius may be assigned a value of 100 miles on the assumption that most consumers would not be willing or would not prefer to travel more than that radius to investigate a potential car purchase. Other categories, business types and distances are possible. As for instance illustrated in Fig. 4, for a given merchant or vendor category, a working business radius (WBR) may be estimated or empirically measured which captures increasing proportions of queries of interest depending on distance, from which a suitable combination of distance and query yield may be selected. That working distance or radius may inform maximum working radius 118, when employed.

In general then, and as for instance likewise illustrated in Fig. 2, both user information and query information may be transmitted to locality engine 116, which may in turn likewise interrogate the content database 108 for locality-matched advertisements which may be more likely to satisfy the user's query or interest. Thus, for example, a user entering a set of search terms 104 such as "Seattle Mercedes dealerships" may be logically inferred to be seeking potential local outlets for an automotive brand in the Seattle metropolitan area. When that local intent or objective is determined, the locality engine 116 may then interrogate the content database 108 for car dealers or vendors appropriately matching the set of search terms 104, in the geographic area of interest to the buyer. Towards these purposes, according to embodiments of the invention the locality engine 116 or other resource may parse and analyze the set of search terms 104 to generate an assessment of the degree of the local quality or nature of the user's query.

More particularly, according to embodiments the set of search terms 104 may be analyzed by locality engine 116 to generate a quantitative assessment or metric of the degree of local intent reflected in the user's query. According to embodiments, there may be one query local intent measure (QLIM) generated for each search term, which may gauge the degree of local search intention when a typical user searches for this term. The QLIM measure may not necessarily be associated with a specific location, but instead may reflect a generic index showing whether a user will be interested in local content when they search for this term. The QLIM or other metric may be calculated offline from at least the following sets of data, in order:

1. The search term itself,
2. Clicked results from the search term, and
3. Related search terms.

Each step or level in this processing sequence may add accuracy to the resulting QLIM score. That measure may in embodiments be generated according to techniques as follows.

<u>Step 1:</u> Initial QLIM calculation from search term.

In this step, the given term itself may be parsed for local keywords. The keywords may be searched against a local keyword collection or dictionary, for instance compiling town, city, state or other names, addresses, telephone numbers or area codes or postal ZIP codes. An initial score of the QLIM may be calculated using a formula such as:

$$\text{QLIM1} = \text{local keyword count} / \text{keyword count},$$

QLIM having value ranges between 0 and 1.

For example, the search term "BMW" within the set of search terms 104 may have a QLIM score of 0.0. "BMW Redmond" may have a QLIM score of 0.5, while "Redmond weather" may have a QLIM score of 1.0. The locality engine 116 or search service 106 may maintain a list or database of locality-related search terms, and record their QLIM or other locality measures. The locality engine 116 may define a threshold, T1, for deciding whether subsequent steps will need to be executed to adjust or refine QLIM values. For example, with a threshold of T1=1, all search terms that consist of any non-local keywords may be sent to subsequent steps for QLIM adjustment. For those terms whose QLIM values are above T1, this type of processing may stop.

<u>Step 2:</u> QLIM adjustment from clicked results.

In embodiments, for terms whose QLIM1 values are below the defined threshold, a further step may be performed to add accuracy to the QLIM value from the clicked content from this search term. By for instance aggregating non-paid and paid content clicked from a search term, a result tree rooted from this search term may be obtained. A result tree presents actual user search experience on the root term. The approach in Step 2 is to adjust QLIM by using the clicked local intention measure (CLIM) of the clicked content. The CLIM of the clicked content may also be weighted by relatedness to the search term. A site which received the most number of clicks from a search term may not be the most relevant site.

For example, site A will not be very relevant to a term if a majority of users clicked on site A also later clicked or navigated to site B when searching for the given term. In this example, Site B should be more relevant to the term if majority of users who search for the given term stopped at site B. (That is, B is the last site these users visited in their search sessions). This results in a heuristic which may be applied by locality engine 116 or other resources, that a clicked site is most related to a search term if this site has the largest number of searches for the given term stopped at this site.

Traffic drain, D, may be defined to be the outgoing traffic from a clicked site that does not go into another clicked site. In other words, D denotes the amount of the outbound "leak" traffic out of the result tree from each result node. Then, there is a:

$$\text{Property of D: Sum(D) on all results = incoming traffic to the search term.}$$

This step uses D-weighted CLIM values of clicked results to adjust the QLIM of the search term:

$$QLIM2=sum(D(ClickedResult)*CLIM(ClickedResult))/sum(D(ClickedResult))$$

The sum may be taken on all clicked result sites. The adjusted QLIM2 may range between 0 and 1, or other values.

Fig. 5 illustrates an example result tree for the search term "pizza", generated according to embodiments of the invention. Similar to Step 1, a threshold, T2, may be defined for this step. Now the adjusted QLIM is:

$$QLIM = QLIM + (1\text{-}QLIM) * QLIM2$$

If QLIM >=T2, then stop.0

For terms with QLIM < T2, a further Step 3 will need to be executed to try to further detect local search intention.

<u>Step 3:</u> Further QLIM adjustment from search term network.

By aggregating the search term click stream resulting from the set of search terms 104, a search term network may be obtained. In this network, each search term can have a number of descendant terms, which are the search terms users searched after the given term in the same search session. The approach of this step is to use the QLIM values of descendant terms to collectively further refine or adjust the QLIM of the parent term.

A term, the train, D, may be calculated for each descendant term, relative to the incoming traffic to the term of interest. A descendant term with a larger D is better relevant (or related) to the term of interest because users search the term of interest also tend to search this descendant term and then go away.

Adjusted QLIM from Step 3:

$$QLIM3=sum(D(DescendantTerm)*QLIM(DecendentTerm))/sum(D(DescendantTerm)),$$

where the sum is across all descendant terms. QLIM3 may range between 0 and 1 or take on other values. Fig. 6 illustrates a term network and calculated QLIM3 Now the adjusted QLIM is:

$$QLIM = QLIM + (1\text{-}QLIM) * QLIM3$$

This is a last step for detection of the local intention embodied in the set of search terms 104. It may be noted that according to further embodiments of the invention, a user may be also assigned a user local intention measure (ULIM) which gauges a user's general local intention from a pattern of searches performed by that user over a period of time. When used, ULIM may be calculated using QLIM and D values of the terms a user searched, which are a subset of the term network:

$$ULIM=sum(D(SearchedTerm)*QLIM(SearchedTerm))/sum(D(SearchedTerm))$$

The sum is across all searched terms by the user.

With these or other query and user measures defined, the locality engine 116 may match the local quality, nature or intention of the set of search terms 104 to that of advertisements or other listings or content in content database 108. A search's composite local intention measure, SLIM, may for example be expressed as:

$$SLIM = max(QLIM(query), ULIM(user))$$

where QLIM and ULIM are localness measure of the search query and the end user, respectively, SLIM simply taking the max of QLIM and ULIM. In embodiments, the query measure QLIM may be used by itself According to embodiments of the invention in another regard, the content of content database 108 may be subjected to similar localness measures as the query measure (QLIM) or other metrics. This measure, which may for instance be denoted as a content local intention measure, may be generated for instance by parsing the HTML, XML or other content of advertisements or other content or media for local indicators, in a similar fashion to which queries may be processed. Advertisers or other participants may also, in embodiments, be permitted or required to specifically supply a rating of the localness of their own content. According to embodiments of the invention in one regard, the resulting CLIM values, for individual content or lists of content, may be used to match against the QLIM, SLIM or other measure of an incoming search query as calculated by the formulas above, or otherwise.

According to embodiments of the invention in another regard, in implementations the SLIM and CLIM values may be Booleanized by locality engine 116 for purposes of generating an overall localness match. A search localness intention flag may be defined for each search:

$$SLIF = 1, \text{ when } SLIM >= Ts$$

$$= 0, \text{ otherwise}$$

where Ts is a threshold value. Similarly, a localness intention flag may be defined for content in content database 108 as:

$$CLIF = 1, \text{ when } CLIM >= Tc$$

$$= 0, \text{ otherwise.}$$

Global localness matching may then proceed according to the following steps:

1. When a search's SLIF = 1, only those listings with CLIF =1 match the search.

2. When a search's SLIF = 0, CLIF is not a matching criterion for selecting content for delivery. Other Boolean and other flags or values are possible.

According to embodiments of the invention in one regard, therefore, and globally speaking, advertisements or other content with a significant degree local intentions may be matched only to a set of search terms 104 with a significant degree of local intentions. Other metrics, comparisons and matching criteria are possible, but in all cases the locality engine 116 and other resources of the invention do not merely retrieve advertisements or other content for presentation to the user based only on geographic keyword matching, but on an attempt to identify and quantitatively evaluate the user's local objective in the search. It may be noted that for searches that do not show a significant degree of local intention, content from content database 108 may be delivered without filtering for geographic match.

Overall locality detection and content processing is illustrated in Fig. 7. In step 702, processing may begin. In step 704, the search service 106 or other search engine or facility may receive a query including search terms 104, such as word, text, numeric or other expressions or input. In step 706, the search terms 104 of the search query may be parsed by locality engine 116 to detect or match those terms to geographic identifiers or indicators, such as state, city or town names, addresses including postal ZIP codes, telephone numbers including area codes, or other geographical or regional indicators. In step 708, the locality engine 116 may generate an assessment or rating of the user's physical location as well as the local intent of the query, for instance by way of detected keywords or locality identifiers, their frequency, hierarchical location within a search tree, or other criteria or factors.

In step 710, the locality engine 116 or other resource may interrogate the content database 108 for a match to the geographic indicator or identifiers associated with the user or user's query, to the user's or query's evaluated location or other location information. In step 712, a comparison of the user's or query's evaluated location, local intent of the query may be generated against locality-matched advertisements or other content within content database 108, for instance stored in ad table 118 or otherwise. In step 714, locality-selected results 110 resulting from those comparisons or reports may be transmitted and presented to the user at client 102 or other device or location. In step 716, the locality-selected results 110 may be refined based on further queries or filtering, or based on the user clicking or otherwise selecting URLs or other content within locality-selected results 110, or otherwise. In step 718, processing may repeat, return to a prior processing point, jump to a further processing point or end.

The foregoing description of the invention is illustrative, and modifications in configuration and implementation will occur to persons skilled in the art. For instance, while the invention has generally been described in terms of the parsing of a set of search terms inputted to a search service site to determine the presence or degree of locality-based content, in embodiments other user inputs or other search, query or other sources or events may be scanned, such as text strings from Web sites, text strings inputted via network-enabled cellular or other devices, or other content sources. Likewise, while the invention has in some regards been described as involving the delivery of local content received from advertisers participating in a paid-for or subscription based network service, in embodiments localized ads or other content may be received from other sources, such as for example advertisers or others who do not participate or do not pay for their participation in a network or service.

Similarly, while the invention has in embodiments been described as delivering selectable advertisements or other content from a single content database 108, in embodiments the local ads or other content delivered to the client 102 or other destinations from multiple databases or other storage or sources. Other hardware, software or other resources described as singular may in embodiments be distributed, and similarly in embodiments resources described as distributed may be combined. The scope of the invention is accordingly intended to be limited only by the following claims.

## Claims

1. A system for generating locality-selected search results, comprising:

   an input interface to receive a set of search terms for a user search;
   an interface to a content store, the content store storing localized content; and
   a locality engine, communicating with the input interface and the interface to the content store, the locality engine processing the search terms to analyze a local intent of the search and generate locality-selected search results based on at least a match of the localized content with a location of the user and the local intent of the search.

2. A system according to claim 1, wherein the localized content comprises localized advertisements.

3. A system according to claim 1, wherein the localized content comprises content contributed by subscribers to the content store.

4. A system according to claim 3, wherein the subscribers comprise paid subscribers.

5. A system according to claim 1, wherein the locality engine analyzes a local intent of the localized content for matching to the local intent of the search.

6. A system according to claim 3, wherein the subscribers indicate a local intent for the localized content.

7. A system according to claim 1, wherein the locality engine analyzes the local intent of the search based on a set of locality indicators comprising at least one of a geographic area name, telephone number information and address information.

8. A system according to claim 7, wherein the set of locality indicators comprises address information, and the address information comprises a postal ZIP code.

9. A system according to claim 1, wherein the locality engine analyzes the set of locality indicators based on at least one of an exact match and a partial match of the set of search terms.

**10.** A system according to claim 1, wherein the locality engine analyzes the local intent based on a function of at least one of a frequency of locality identifiers in the set of search terms, a separation of locality identifiers in the set of search terms, and a positional a tree of locality identifiers in the set of search terms.

**11.** A system according to claim 1, wherein the content store comprises an ad table.

**12.** A system according to claim 1, wherein the locality-selected search results are presented via a Web page.

**13.** A method for generating locality-selected search results, comprising:

receiving a set of search terms for a user search;
processing the search terms to analyze a local intent of the search and generate locality-selected search results based on at least a match of localized content with a location of the user and a local intent of the search.

**14.** A method according to claim 13, wherein the localized content comprises localized advertisements.

**15.** A method according to claim 13, wherein the localized content comprises content contributed by subscribers.

**16.** A method according to claim 15, wherein the subscribers comprise paid subscribers.

**17.** A method according to claim 13, further comprising analyzing a local intent of the localized content for matching to the local intent of the search.

**18.** A method according to claim 15, wherein the subscribers indicate a local intent for the localized content.

**19.** A method according to claim 13, wherein the processing comprises analyzing the local intent of the search based on a set of locality indicators comprising at least one of a geographic area name, telephone number information and address information.

**20.** A method according to claim 19, wherein the set of locality indicators comprises address information, and the address information comprises a postal ZIP code.

**21.** A method according to claim 13, wherein the processing comprises analyzing the set of locality indicators based on at least one of an exact match and a partial match of the set of search terms.

**22.** A method according to claim 13, wherein the processing comprises analyzing the local intent based on a function of at least one of a frequency of locality identifiers in the set of search terms, a separation of locality identifiers in the set of search terms, and a positional a tree of locality identifiers in the set of search terms.

**23.** A method according to claim 13, wherein the localized content is stored in an ad table.

**24.** A method according to claim 13, further comprising presenting the locality-selected search results via a Web page.

**25.** A set of locality-selected search results, the set of locality-selected search results being generated by a method of:

receiving a set of search terms for a user search;
processing the search terms to analyze a local intent of the search and generate locality-selected search results based on at least a match of localized content with a location of the user and a local intent of the search.

**26.** A set of locality-selected search results according to claim 25, wherein the localized content comprises localized advertisements.

**27.** A set of locality-selected search results according to claim 25, wherein the localized content comprises content contributed by subscribers.

**28.** A set of locality-selected search results according to claim 27, wherein the subscribers comprise paid subscribers.

**29.** A set of locality-selected search results according to claim 25, wherein the method further comprises analyzing a local intent of the localized content for matching to the local intent of the search.

**30.** A set of locality-selected search results according to claim 27, wherein the subscribers indicate a local intent for the localized content.

**31.** A set of locality-selected search results according to claim 25, wherein the processing comprises analyzing the local intent of the search based on a set of locality indicators comprising at least one of a geographic area name, telephone number information and address information.

**32.** A set of locality-selected search results according to claim 31, wherein the set of locality indicators comprises address information, and the address information comprises a postal ZIP code.

**33.** A set of locality-selected search results according to claim 25, wherein the processing comprises analyzing the set of locality indicators based on at least one of an exact match and a partial match of the set of search terms.

**34.** A set of locality-selected search results according to claim 25, wherein the processing comprises analyzing the local intent based on a function of at least one of a frequency of locality identifiers in the set of search terms, a separation of locality identifiers in the set of search terms, and a positional a tree of locality identifiers in the set of search terms.

**35.** A set of locality-selected search results according to claim 25, wherein the localized content is stored in an ad table.

**36.** A set of locality-selected search results according to claim 25, wherein the method further comprises presenting the locality-selected search results via a Web page.

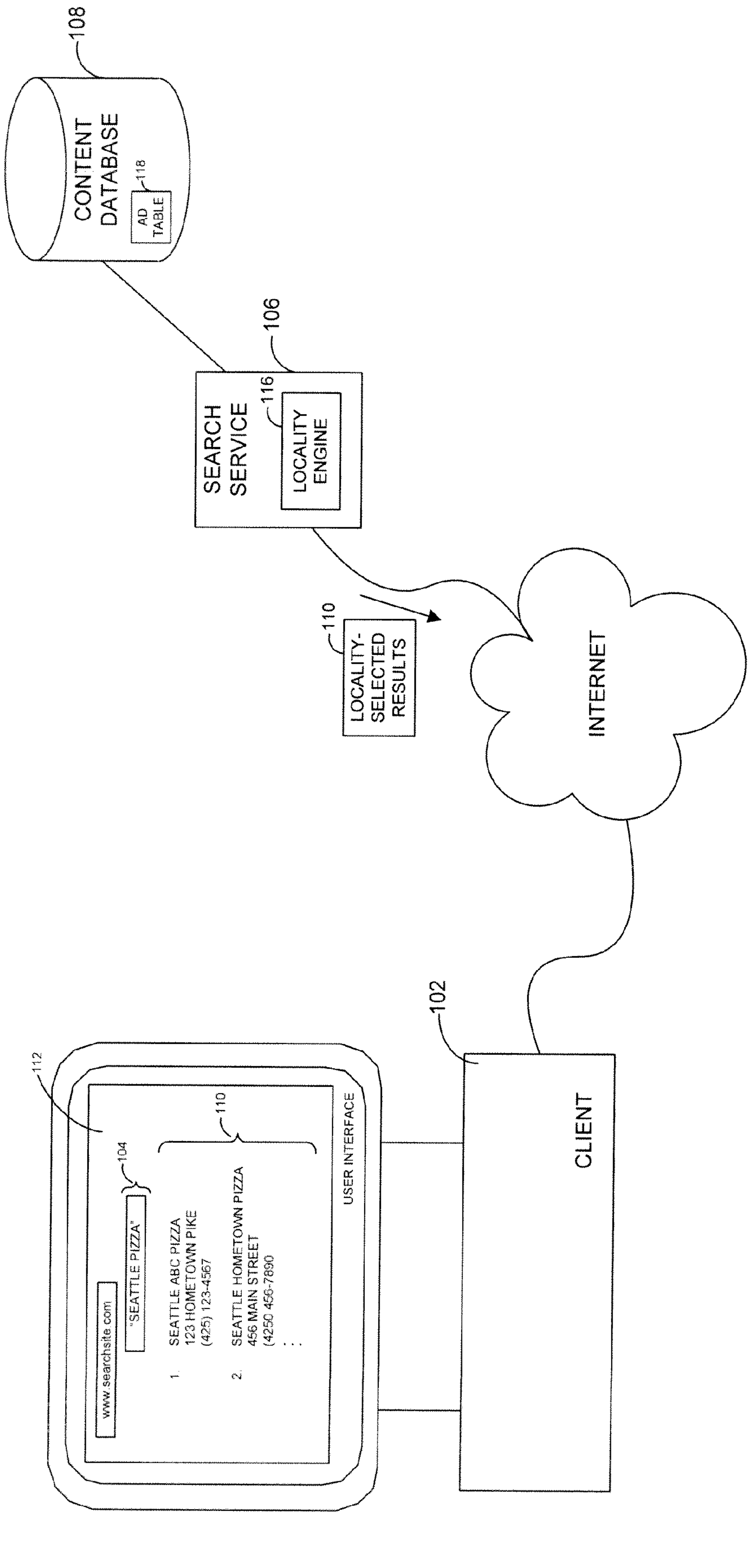
108
CONTENT DATABASE
AD TABLE
118
106
SEARCH SERVICE
LOCALITY ENGINE
116
110
LOCALITY-SELECTED RESULTS
INTERNET
102
CLIENT
112
www.searchsite.com
"SEATTLE PIZZA"
104
110
1. SEATTLE ABC PIZZA
123 HOMETOWN PIKE
(425) 123-4567
2. SEATTLE HOMETOWN PIZZA
456 MAIN STREET
(4250 456-7890
USER INTERFACE

FIG. 1

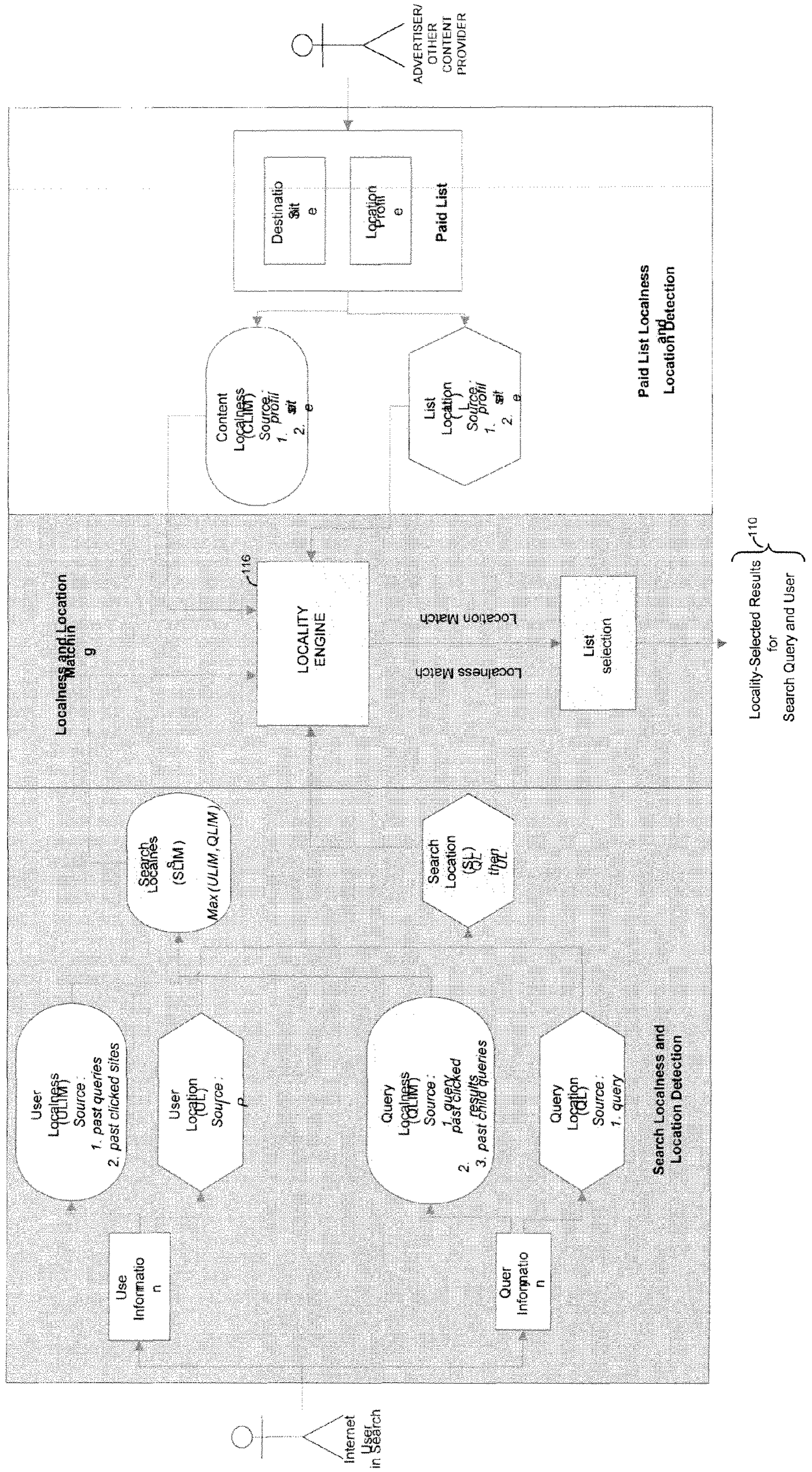
ADVERTISER/ OTHER CONTENT PROVIDER
Paid List
Paid List Localness and Location Detection
Localness and Location Matching
LOCALITY ENGINE
116
Location Match
Localness Match
List selection
Locality-Selected Results for Search Query and User
110
Search Localness and Location Detection
Internet User in Search

FIG. 2

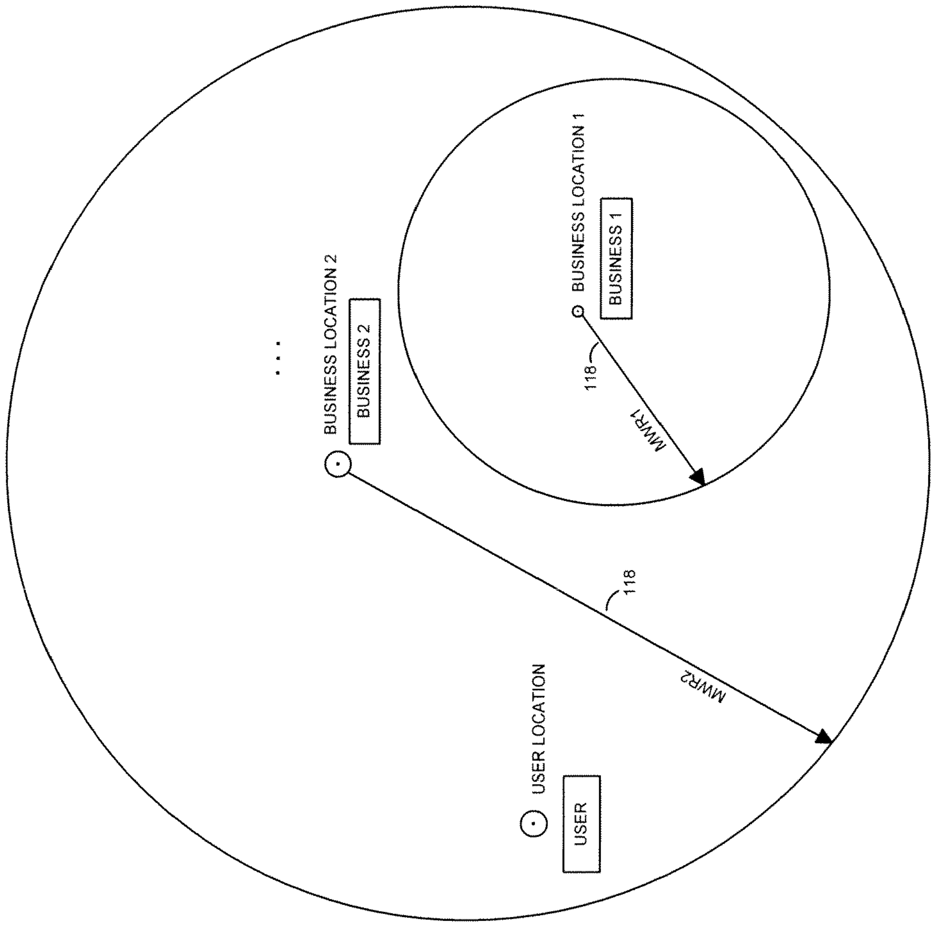
BUSINESS LOCATION 1
BUSINESS 1
118
MWR1
BUSINESS LOCATION 2
BUSINESS 2
...
118
MWR2
USER LOCATION
USER

FIG. 3

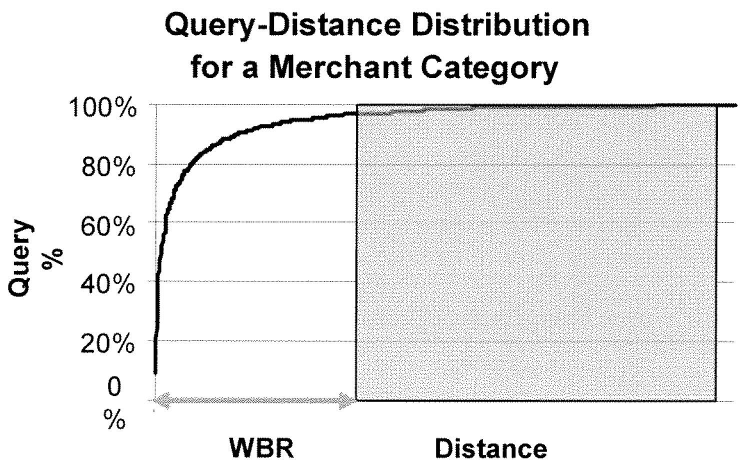
Query-Distance Distribution
for a Merchant Category
100%
80%
60%
40%
20%
0
%
Query
%
WBR
Distance

FIG. 4

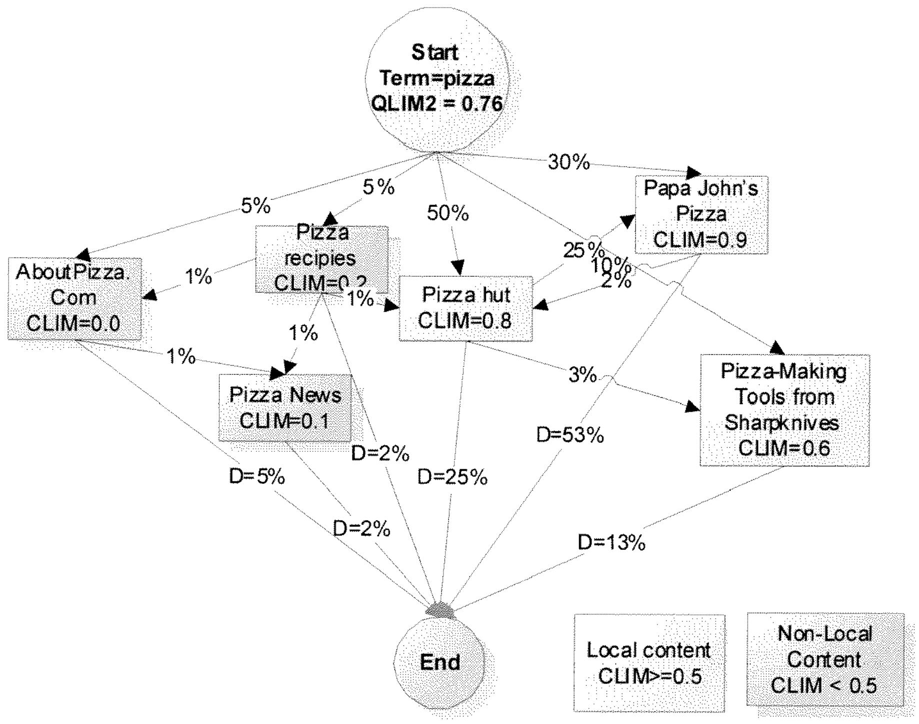
Start
Term=pizza
QLIM2 = 0.76
30%
5%
5%
50%
Papa John's
Pizza
CLIM=0.9
Pizza
recipies
CLIM=0.2
25%
10%
2%
AboutPizza.
Com
CLIM=0.0
1%
1%
Pizza hut
CLIM=0.8
1%
1%
Pizza News
CLIM=0.1
3%
Pizza-Making
Tools from
Sharpknives
CLIM=0.6
D=53%
D=2%
D=5%
D=25%
D=2%
D=13%
End
Local content
CLIM>=0.5
Non-Local
Content
CLIM < 0.5

FIG. 5

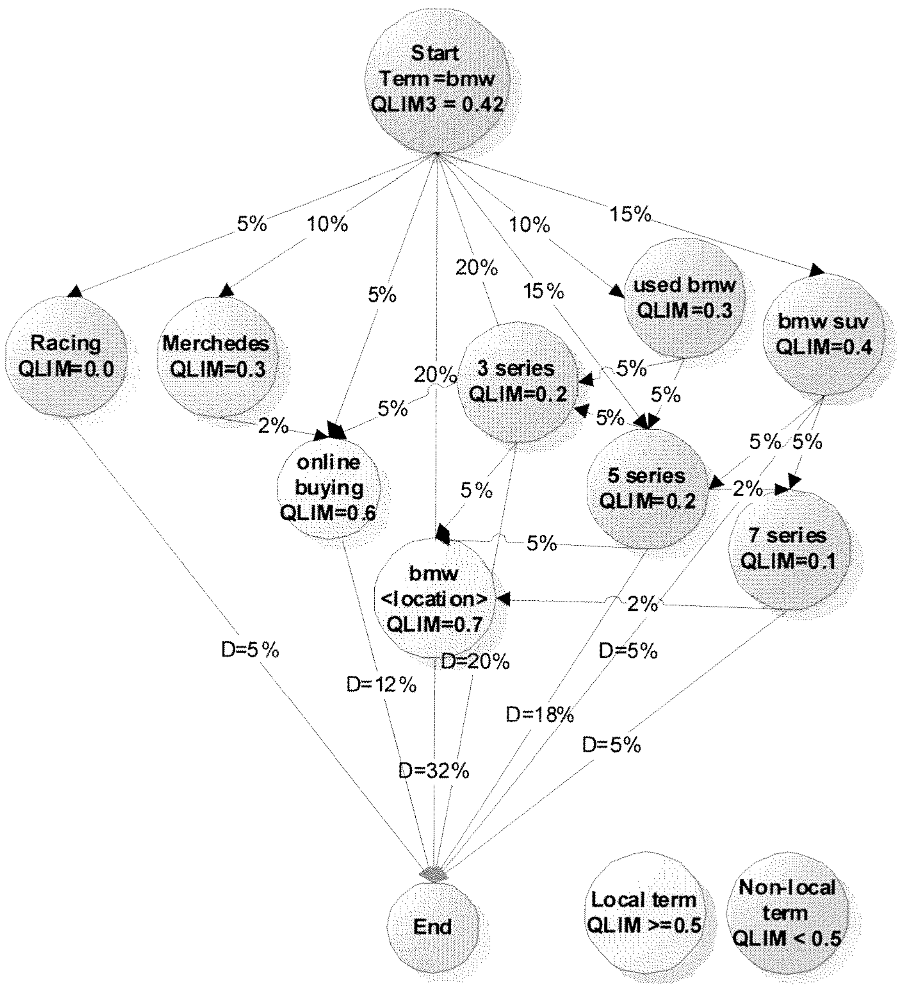
Start
Term =bmw
QLIM3 = 0.42
5%
10%
10%
15%
20%
15%
5%
Racing
QLIM=0.0
Merchedes
QLIM=0.3
used bmw
QLIM=0.3
bmw suv
QLIM=0.4
3 series
QLIM=0.2
20%
5%
5%
5%
2%
online
buying
QLIM=0.6
5 series
QLIM=0.2
5%
5% 5%
2%
7 series
QLIM=0.1
5%
bmw
<location>
QLIM=0.7
2%
D=5%
D=12%
D=20%
D=5%
D=18%
D=32%
D=5%
End
Local term
QLIM >=0.5
Non-local
term
QLIM < 0.5

FIG. 6

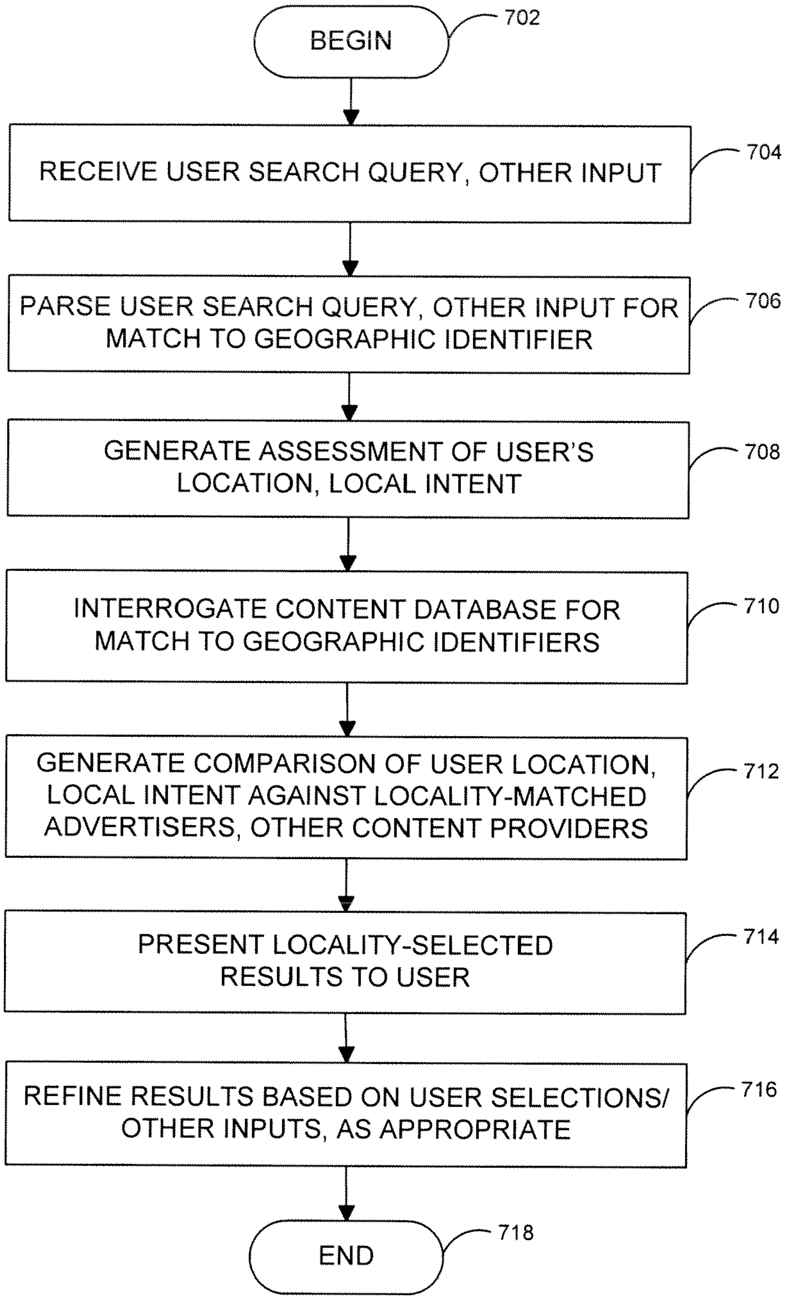
BEGIN
702
RECEIVE USER SEARCH QUERY, OTHER INPUT
704
PARSE USER SEARCH QUERY, OTHER INPUT FOR MATCH TO GEOGRAPHIC IDENTIFIER
706
GENERATE ASSESSMENT OF USER'S LOCATION, LOCAL INTENT
708
INTERROGATE CONTENT DATABASE FOR MATCH TO GEOGRAPHIC IDENTIFIERS
710
GENERATE COMPARISON OF USER LOCATION, LOCAL INTENT AGAINST LOCALITY-MATCHED ADVERTISERS, OTHER CONTENT PROVIDERS
712
PRESENT LOCALITY-SELECTED RESULTS TO USER
714
REFINE RESULTS BASED ON USER SELECTIONS/ OTHER INPUTS, AS APPROPRIATE
716
END
718

FIG. 7